# EUROPEAN PATENT APPLICATION

(11) **EP 4 668 248 A1**
(43) Date of publication of application: **24.12.2025**
(21) Application number: 24882597.8
(22) Date of filing: 02.08.2024
(51) Int. Cl.: G09B 1/40, G09B 21/00, G09B 19/00, G11B 20/10, G06T 7/73, G06N 3/0464

(54) **MUSIC PLAYING METHOD AND DEVICE USING BLOCKS**

(30) Priority: 24.10.2023 KR 20230143125
(71) Applicant: Lim, Juhwan, Daegu 42274 (KR)
(72) Inventor: SEO, Eunbin, Icheon-si Gyeonggi-do 17393 (KR); KIM, Jaehun, Daegu 41856 (KR); LIM, Juhwan, Daegu 42274 (KR)
(74) Representative: Schmitt-Nilson Schraud Waibel Wohlfrom Patentanwälte Partnerschaft mbB
(86) International application number: PCT/KR2024/011379
(87) International publication number: WO 2025/089568

(57) **Abstract**

Disclosed are a method and a device for playing music by using blocks. The music playing method using at least one blocks, which is performed by the music playing device according to an embodiment of the present disclosure, may include capturing an image including the at least one or more blocks through a reception device mounted on the music playing device, recognizing the captured at least one or more blocks by using a trained deep learning neural network model, determining an arrangement structure of the recognized blocks, and playing the music at the music playing device, based on the determined arrangement structure.

## Description

### [TECHNICAL FIELD]

The present disclosure relates to a method and a device for playing music by using blocks. More particularly, the present disclosure relates to a method and a device for recognizing an arrangement structure of blocks through an artificial intelligence model and playing music corresponding thereto, by utilizing an imaging device mounted on a music playing device.

### [BACKGROUND ART]

With recent technological advances, software coding education has become mandatory starting from the elementary school. Accordingly, coding toys (e.g., unplugged teaching tools) for beginners in coding education are attracting attention. Meanwhile, special schools also utilize various coding toys for students with disabilities (e.g., visual impairment and borderline intelligence disorder), but practical coding education is not being carried out smoothly due to methods not suitable for students with disabilities and difficulty.

Accordingly, there is a need for an educational method capable of efficiently conducting coding education for the visually impaired or non-disabled even by utilizing the arrangement of coding toys (e.g., blocks) more easily.

### [DETAILED DESCRIPTION OF THE INVENTION]

### [TECHINICAL PROBLEM]

The present disclosure is directed to provide a method and a device for playing music by using blocks.

The present disclosure is directed to a method and a device for playing music by recognizing an arrangement structure of blocks by utilizing an imaging device and utilizing an artificial intelligence neural network model.

The present disclosure is directed to provide a method and a device for playing music, which match a coding algorithm to a musical composition.

The technical problems to be solved by the present disclosure are not limited to the aforementioned problems, and any other technical problems not mentioned herein will be clearly understood from the following description by those skilled in the art to which the present disclosure pertains.

### [TECHNICAL SOLUTION]

According to an aspect of the present disclosure, a music playing method using at least one or more blocks, which is performed by a music playing device, may include capturing an image including the at least one or more blocks through a reception device mounted on the music playing device, recognizing the captured at least one or more blocks by using a trained deep learning neural network model, determining an arrangement structure of the recognized blocks, and playing music at the music playing device, based on the determined arrangement structure.

In the music playing method according to the present disclosure, the reception device may be an imaging device.

In the music playing method according to the present disclosure, the deep learning neural network model may be a convolutional neural network model.

In the music playing method according to the present disclosure, the determining of the arrangement structure may include determining coordinates of a location where the recognized at least one or more blocks are placed and a block kind.

In the music playing method according to the present disclosure, the trained deep learning neural network model determines the arrangement structure of the blocks as an arrangement structure in which there are interconnected at least one or more of a start block for playing at least one or more instrument blocks connected thereto once, a repeat block for repeatedly playing at least one or more instrument blocks connected thereto, after music is played by the at least one or more instrument blocks connected to the start block, a level block for designating a playing level of the instrument block, and an instrument block corresponding to each instrument for the music playback.

In the music playing method according to the present disclosure, the music playing device plays the music based on all of a plurality of the arrangement structures captured through the reception device.

According to another aspect of the present disclosure, there may be provided a music playing device using blocks. The device may include a reception device that captures an image including at least one or more blocks, a memory, and at least one or more processors. The processors may recognize the at least one or more blocks captured through the reception device by using a trained deep learning neural network mode, may determine an arrangement structure of the blocks, and may play the music based on the determined arrangement structure.

According to another aspect of the present disclosure, there may be provided a non-transitory computer-readable recording medium or software including executable instructions executable to perform a music playing method.

According to another aspect of the present disclosure, there may be provided a non-transitory computer-readable recording medium storing a program for implementing a music playing method. The music playing method may include capturing an image including at least one or more blocks through a reception device mounted on the music playing device, recognizing the captured at least one or more blocks by using a trained deep learning neural network model, determining an arrangement structure of the recognized blocks, and playing music at the music playing device, based on the determined arrangement structure.

The features briefly summarized above regarding the present disclosure are merely example aspects of the detailed description of the present disclosure to be given later and do not limit the scope of the present disclosure.

### [ADVANTAGEOUS EFFECTS OF THE INVENTION]

According to the present disclosure, there may be provided a method and a device for playing music, which enable direct/indirect coding education simply by assembling blocks.

Also, according to the present disclosure, there may be provided a method and a device for playing music, which arrange and play music according to coding logic.

In addition, according to the present disclosure, coding may be easily accessed by both the visually impaired and the non-disabled individual, and it may be possible to learn coding through synesthetic elements (e.g., tactile and auditory) rather than visual elements.

The effects capable of being obtained from the present disclosure are not limited to the effects mentioned above, and other effects not mentioned will be clearly understood by one skilled in the art, to which the present disclosure belongs, from the description below.

### [DESCRIPTION OF THE DRAWINGS]

FIG. 1 is a diagram for describing a method for playing music by utilizing blocks, according to an embodiment of the present disclosure.
FIG. 2 is a diagram for describing types of blocks used in a music playing method, according to an embodiment of the present disclosure.
FIG. 3 is a diagram for describing types of blocks used in a music playing method, according to an embodiment of the present disclosure.
FIG. 4 is a diagram for describing a method of arranging blocks for playing music, according to an embodiment of the present disclosure.
FIGS. 5 to 10 are diagrams for describing a block connection rule for music playback, according to an embodiment of the present disclosure.
FIG. 11 is a diagram for describing a configuration of a music playing device utilizing blocks, according to an embodiment of the present disclosure.

### [BEST MODE]

Hereinafter, embodiments of the present disclosure will be described in detail with reference to the accompanying drawings such that one skilled in the art to which the present disclosure belongs readily carries out the present disclosure. However, the present disclosure may be implemented in various different forms and is not limited to the embodiments described herein.

In describing the embodiments of the present disclosure, when the detailed description associated with well-known components or functions is deemed to obscure the subject matter of the present disclosure, the detailed description will be omitted. Components/elements not associated with the description of the present disclosure are omitted in the drawings, and similar components/elements are denoted by similar reference numerals/signs throughout the specification.

In the present disclosure, it will be understood that when a first element is referred to as being "connected" or "coupled" to a second element, the first element may be directly connected to the second element or may be indirectly connected to the second element, with a third element interposed therebetween. In addition, when any element "includes" or "possesses/has" another element, unless explicitly described to the contrary, it means that any other element(s) may be further included, not excluded.

In the present disclosure, the terms such as "first" and "second" are used only to distinguish one element from another element and do not imply any priority or importance unless specifically mentioned. Accordingly, without departing from the scope of the present disclosure, a first component of one embodiment may be referred to as a second component of another embodiment. Similarly, a second component of one embodiment may be referred to as a first component of another embodiment.

In the present disclosure, components which are distinguished from each other are only for clearly describing their characteristics, which does not mean that the components are necessarily separated from each other. That is, a plurality of components may be integrated to form a single hardware or software unit, or a single component may be distributed to form a plurality of hardware or software units. Accordingly, an embodiment where components are integrated or a single component is distributed is included in the scope of the present disclosure, even though not mentioned separately.

In the present disclosure, components which are described in various embodiments do not necessarily mean essential components, and some of the components may be optional components. Accordingly, an embodiment which is implemented with a subset of components to be described in an embodiment is also included in the scope of the present disclosure. In addition, an embodiment which includes any other components in addition to components to be described in various embodiments is also included in the scope of the present disclosure.

Below, embodiments of the present disclosure will be described in detail with reference to the accompanying drawings.

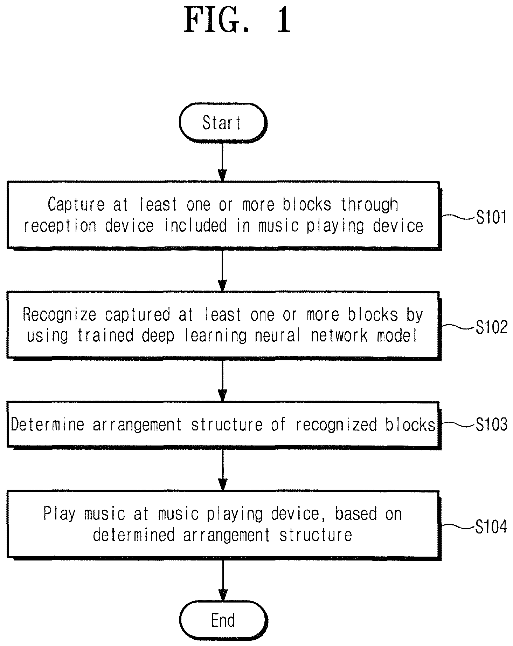

FIG. 1 is a diagram for describing a method for playing music by utilizing a block, according to an embodiment of the present disclosure.

According to an embodiment of the present disclosure, at least one or more blocks may be captured through a reception device included in a music playing device (S101). For example, the music playing device may refer to a device which includes the reception device and is capable of executing an application for playing music; more specifically, the music playing device may mean an OS-based device. For example, the music playing device may mean an iPad, a smartphone, or a personal computer (PC) but is not necessarily limited thereto.

Also, the reception device may be a kind of imaging device. That is, the music playing device according to an embodiment of the present disclosure may capture at least one or more blocks through the mounted imaging device and may play music by using blocks included in the captured scene. In this case, the imaging device may mean a camera as an example but is not necessarily limited thereto. The imaging device according to an embodiment of the present disclosure may capture more various blocks through functions such as zoom-in and zoom-out.

According to an embodiment of the present disclosure, the music playing device may recognize the captured at least one or more blocks by using a trained deep learning neural network model (S102). In this case, the deep learning neural network model may be a convolutional neural network.

The deep learning neural network model may determine a type of the blocks as a block in which there are interconnected at least one or more blocks of the following: 1) a start block for playing at least one or more instrument blocks connected thereto once, 2) a repeat block for repeatedly playing at least one or more instrument blocks connected to the start block after music is played by the connected at least one or more instrument blocks, 3) a level block for designating a playing level of the instrument block, 4) an instrument block corresponding to each instrument for the music playback, 5) an operation block which serves to adjust a current level when mounted on a block, 6) a condition block capable of setting a condition of a condition block corresponding to an instrument block until a next condition block appears, 7) a star storage block capable of in advance putting (or fitting) together and storing instrument blocks to be played, and 8) a star execution block capable of executing instrument blocks stored in the star storage block at once. In this case, each of the instruments may be at least one of a drum, a brass, a piano, a bass guitar, and a lead guitar, for example, but is not necessarily limited thereto. Each instrument may mean various other instruments.

For example, the deep learning neural network model may receive a block image or image data included in the scene captured by the imaging device (e.g., a camera) and may output recognition information of a block with the highest probability. In this case, the recognition information may mean an x-coordinate and a y-coordinate of a place in a camera, at which there is an image of each block, and a label number corresponding to a type of the block.

Also, the music playing device according to an embodiment of the present disclosure may determine an arrangement structure of the blocks recognized in operation S102 (S103). That is, operation S102 and operation S103 may constitute an operation of determining the arrangement structure by determining a coordinate value (e.g., an x-coordinate and a y-coordinate) of a location where the at least one or more blocks thus recognized are placed and types of the blocks.

In addition, according to an embodiment of the present disclosure, music may be played by the music playing device, based on the arrangement structure determined in operation S103 (S104). In this case, the music playing device may play the music based on all of the plurality of block arrangement structures recognized through the reception device (e.g., a camera). For example, when an arrangement structure of blocks captured by the imaging device is composed of a plurality of sets, the music may be independently played by the arrangement structures of blocks corresponding to the plurality of sets. In this case, the order of playing music may be determined by a type of the block.

A music playing method which is performed by the music playing device according to an embodiment of the present disclosure may capture a scene including at least one or more blocks through the reception device (e.g., a camera) and may play music based on the captured image. For example, the captured image may be input to a deep learning model. The input process may be performed through Python. Also, when blocks are recognized by the deep learning model, the arrangement structure of the blocks may be determined through a specific algorithm, and music may be played from the music playing device based on the determined arrangement structure.

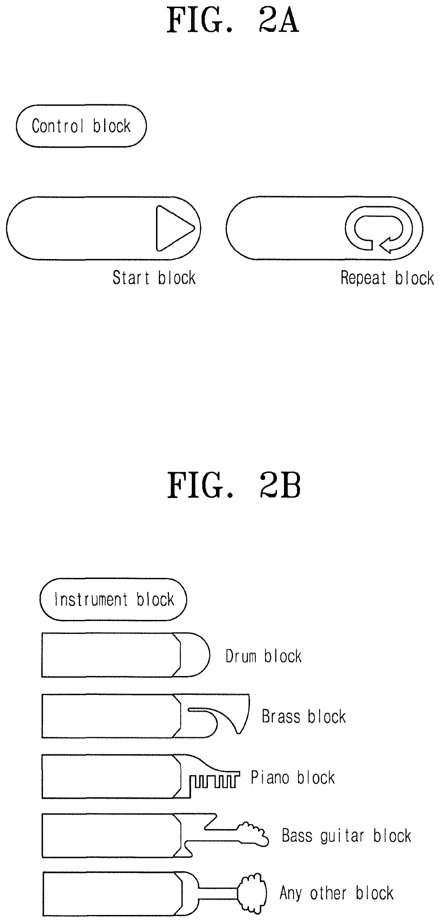

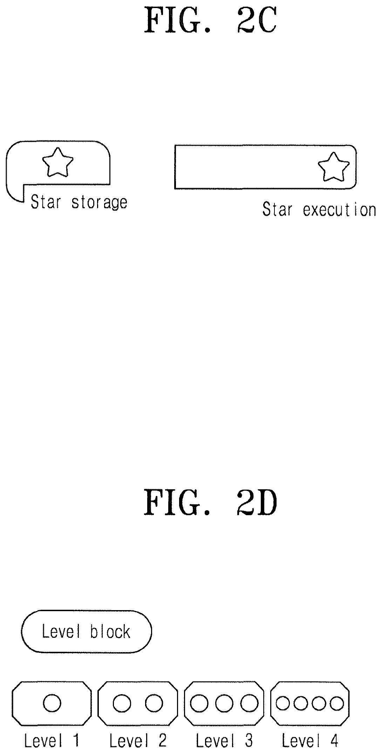

Below, examples of blocks included in an image received by the reception device (e.g., a camera) according to an embodiment of the present disclosure and a music playing algorithm according to the arrangement structure will be described with reference to FIGS. 2 to 10.

FIG. 2 is a diagram for describing types of blocks used in a music playing method, according to an embodiment of the present disclosure.

Referring to FIG. 2A, the start block and the repeat block are illustrated as an example of a control block. In this case, the start block may mean a block for executing blocks connected to the start block once for the first time when being executed. In addition, the repeat block may operate after the start block and may mean a block for repeatedly executing blocks (e.g., instrument blocks) connected to the repeat block indefinitely. Meanwhile, the repeat block may operate solely.

Referring to FIG. 2B, various types of instrument blocks are illustrated. In this case, the instrument blocks may include a drum block, a brass block, a piano block, a bass guitar block, and a lead guitar block but are not necessarily limited thereto. The instrument block may mean a block in which each instrument corresponding to each instrument block is played. Each instrument block may have a structure in which the repeat block, a star block, or any other instrument block is capable of being inserted into an upper end portion thereof.

Referring to FIG. 2C, the star block which is capable of being customized by the user depending on his/her preference is illustrated. The star block may be composed of the star storage block and the star execution block, and the star storage block may mean a block for storing instrument blocks connected to the star storage block as one set. In addition, the star execution block may mean a block for executing a set of instrument blocks stored in the star storage block.

Referring to FIG. 2D, the level block is illustrated. The level block which is a block mounted on the middle portion of an instrument block may mean a block for designating a level (or intensity) of a corresponding instrument. For example, the intensity of music which an instrument equipped with a block of level 2 plays may be stronger than the intensity of music which an instrument equipped with a block of level 1 plays. In this case, an instrument block which is not equipped with the level block may have level 0.

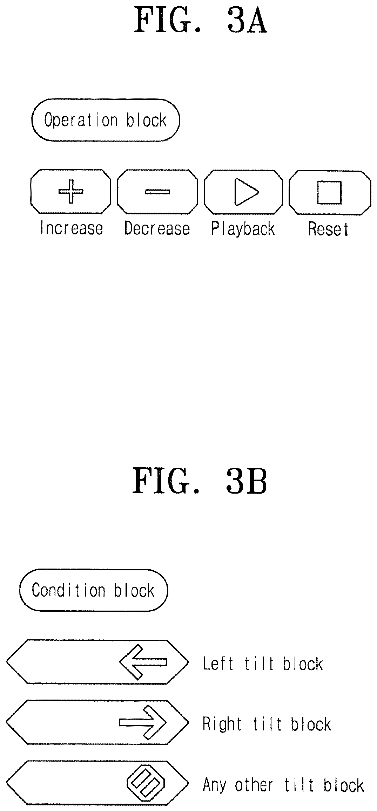

FIG. 3 is a diagram for describing types of blocks used in a music playing method, according to an embodiment of the present disclosure.

Referring to FIG. 3A, the operation block is illustrated. When a corresponding operation block is mounted on a block, the operation block may play a role of adjusting a current level. For example, an increase block may be used to increase a level by +1 from a currently set instrument playback level. In this case, a maximum value of the level which is capable of increasing may be 4 but is not necessarily limited thereto.

In addition, a decrease block may be used to decrease a level by -1 from a currently set instrument playback level. In this case, a minimum value of the level which is capable of decreasing may be 0 but is not necessarily limited thereto.

Meanwhile, a hold block (or a playback block) may mean a block which holds a current level. Also, a reset block may mean a block for enabling a reset to a level first set before the operation block appears.

Referring to FIG. 3B, there is illustrated the condition block for determining whether to play a block connected as a slope of the music playing device is adjusted. For example, in the case of a left tilt block with a left arrow, blocks connected to a lower end portion of the left tilt block may be executed when the music playing device (e.g., a smartphone) is tilted to the left.

Also, in the case of a right tilt block with a right arrow, blocks connected to a lower end portion of the right tilt block may be executed when the music playing device (e.g., a smartphone) is tilted to the right. In contrast, in the case of any other tilt block, when the music playing device (e.g., a smartphone) is tilted in a direction different from a specific direction of a current condition block, blocks connected to a lower end portion of any other tilt block may be executed.

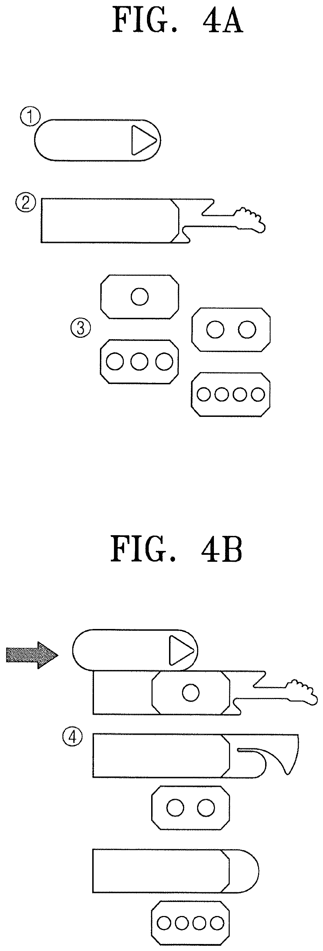

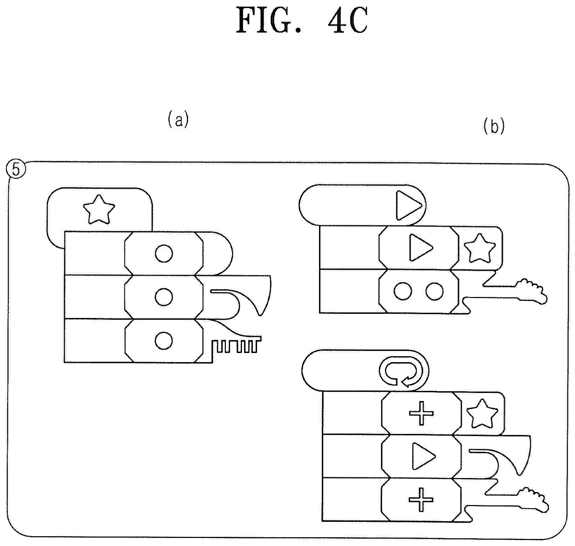

FIG. 4 is a diagram for describing a method of arranging blocks for playing music, according to an embodiment of the present disclosure.

Referring to FIG. 4A, the start block, the instrument block, and the level block are illustrated. The respective blocks may be putting together to fit shapes thereof. For example, referring to FIG. 4A, the instrument block may be inserted under the start block, and the level block for setting a level of a corresponding instrument may be inserted into a central portion of the instrument block. However, attachment locations and structures of blocks according to an embodiment of the present disclosure are provided as an example, and the blocks may be attached at various locations and in various manners.

It is understood from FIG. 4B that a new instrument block is capable of being inserted into a lower end portion of a block unit set in FIG. 4A.

Referring to FIG. 4C, when a plurality of block arrangement structure units exist in the imaging device (e.g., a camera) included in the music playing device, all of pieces of music according to the arrangement structures may be executed. In this case, respective block groups should be arranged with a certain amount of free space such that music playback is performed more smoothly.

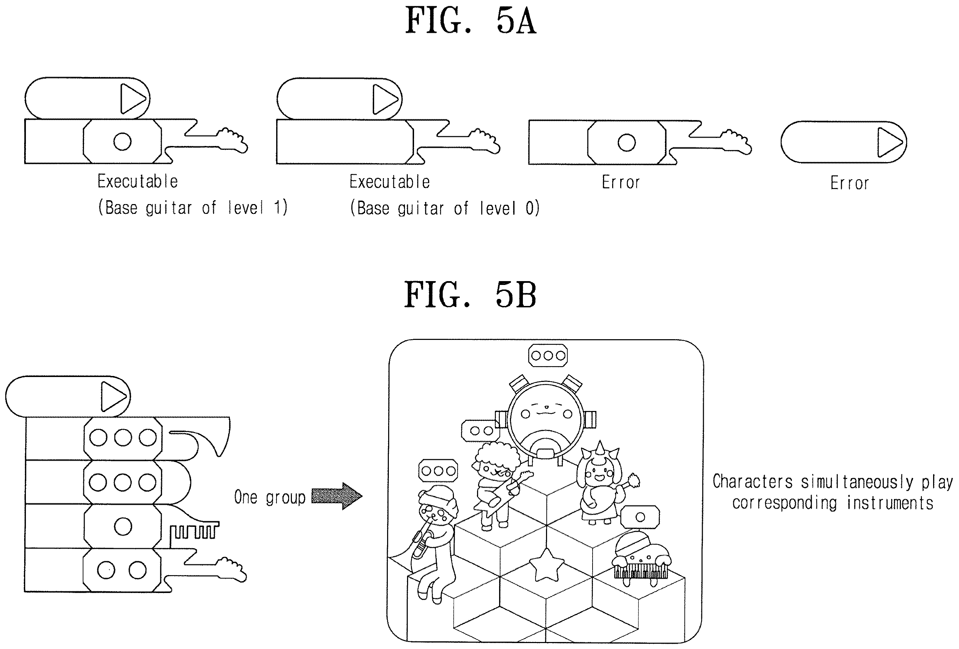

FIGS. 5 to 10 are diagrams for describing a block connection rule for music playback, according to an embodiment of the present disclosure.

It is understood from FIG. 5A that all instrument blocks are executed only when connected to the control block (i.e., the start block or the repeat block). For example, as illustrated in FIG. 5A, the base guitar (level 0 or level 1) is capable of being executed only in a state where the bass guitar is connected to the start block and is incapable of being executed in a state where the start block exists alone or the instrument block exists alone.

It is understood from FIG. 5B that when different instruments are continuously connected, the different instruments are played as a group. For example, as illustrated in FIG. 5B, when a plurality of instrument blocks are connected as a group in a single start block, instruments connected to the corresponding start block may be played at once. In this case, according to an embodiment of the present disclosure, in an application on the music playing device, characters may simultaneously play corresponding instruments on one screen.

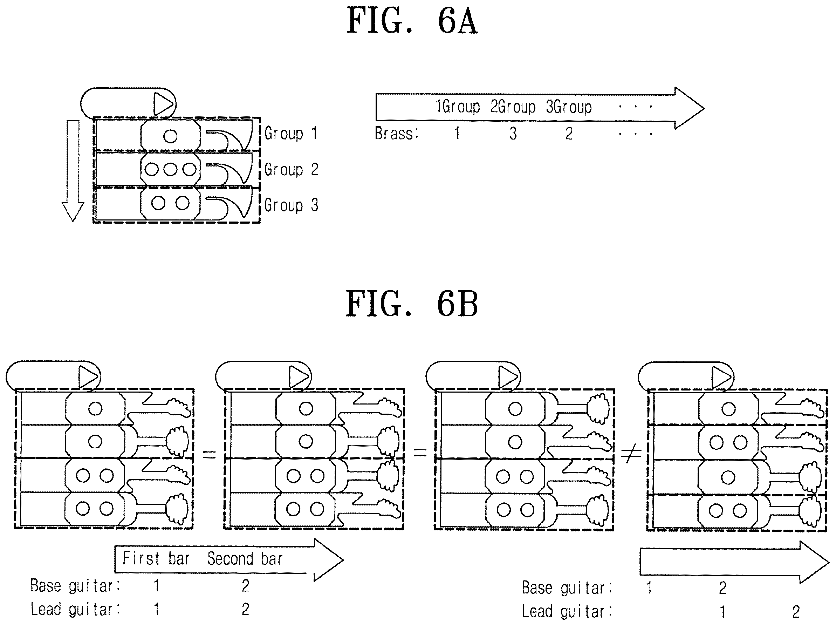

Referring to FIG. 6A, when instruments of the same type are connected in succession, instrument blocks may be played in the order of being connected to be close to the start block. For example, in the case of the brass block illustrated in FIG. 6A, the brass may be played in the order of level 1, level 3, and level 2.

It is understood from FIG. 6B that when instruments of the same type are adjacent to each other within one start block in a state of being separated from each other, the instruments are capable of being played as a group until the same instrument appears. For example, as illustrated in the first drawing of FIG. 6B, the bass guitar of level 1 and the lead guitar of level 1 connected under the start block may be played together at the first bar; because the bass guitar of level 2 again appears thereunder, the bass guitar of level 2 may be played at the second bar together with the lead guitar of level 2 connected under the bass guitar of level 2. This is identically applied even to the case where instrument blocks are implemented as illustrated in the second and third drawings of FIG. 6B. That is, instruments may be played as a group until the same instrument again appears. In contrast, in the case of the fourth drawing of FIG. 6B, because the base guitar of level 2 is directly connected under the base guitar of level 1 and the lead guitar again appears under the lead guitar connected thereunder, music different from the music by the first, second, and third block configurations illustrated in FIG. 6B may be performed. That is, in the fourth drawing of FIG. 6B, the bass guitar of level 1 may be played at the first bar, the bass guitar of level 2 and the lead guitar of level 1 may be played together at the second bar, and the lead guitar of level 2 may be played at the third bar.

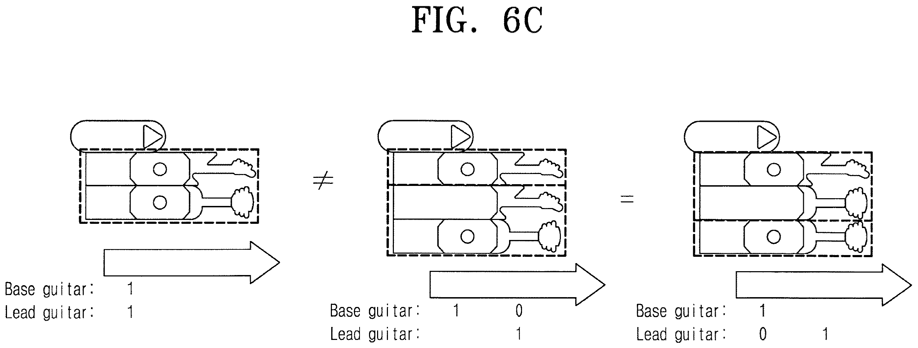

Referring to FIG. 6C, in the case of the first block structure illustrated in FIG. 6C, because the base guitar of level 1 and the lead guitar of level 1 are placed in the start block, the base guitar of level 1 and the lead guitar of level 1 may be played at the first bar.

In the case of the second block structure illustrated in FIG. 6C, the base guitar of level 1 may be played at the first bar, and because the base guitar of level 1 is followed immediately by the bass guitar and the level of the base guitar is 0, the base guitar of level 0 and the lead guitar of level 1 may be played together at the second bar.

Referring to the third block structure of FIG. 6C, because the lead guitar of level 0 is inserted under the base guitar of level 1 and the lead guitar of level 1 is inserted thereunder, the base guitar of level 1 and the lead guitar of level 0 may be played together at the first bar, and the lead guitar of level 1 may be played at the second bar.

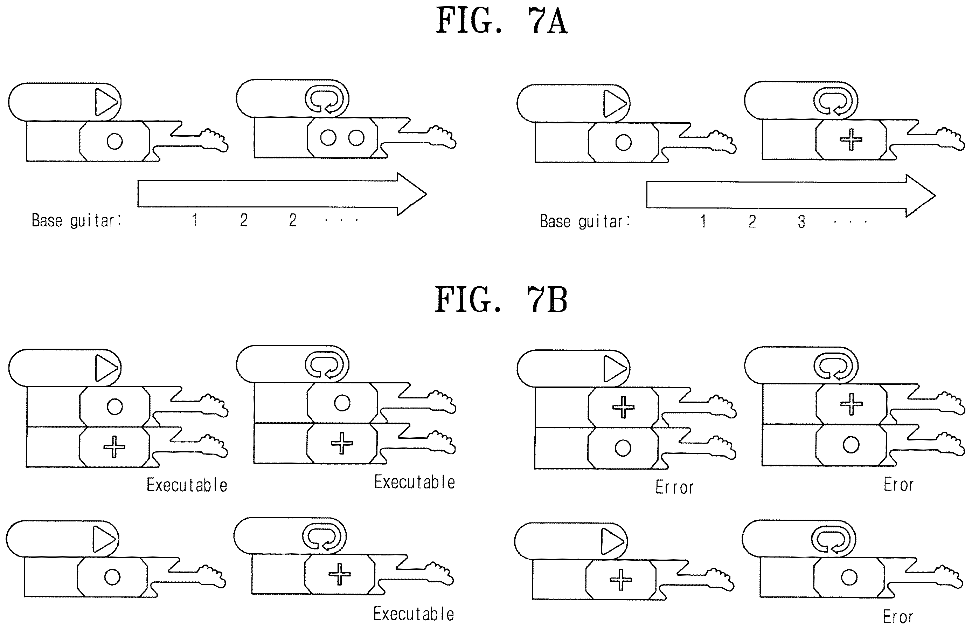

Referring to FIG. 7A, the execution order in which the repeat block follows the start block is illustrated. In the left drawing of FIG. 7A, because the base guitar of level 1 is connected under the start block and the base guitar of level 2 is connected under the repeat block, the base guitar of level 1 may be played once for the first time, and the bass guitar of level 2 may be repeatedly played.

Meanwhile, in the case of the right drawing of FIG. 7A, the base guitar of level 1 may be executed once, and the execution of the base guitar may be repeated indefinitely while increasing to level 2, level 3, etc. depending on an operation of the increase block.

It is understood from FIG. 7B that the level block should be always used when all instrument blocks appear for the first time. For example, when the level of the level block connected just under the start block is level 1, the performance may be executed even when an instrument block to which the increase block is connected appears thereafter. In addition, even when the repeat block to which the increase block is connected exists together with the start block to which the instrument block of level 1 is connected, because the block execution order corresponds to an order in which the infinite repeat block follows the start block, the performance may be executed.

In contrast, when the increase block first appears in a state where the level block does not appear, it may be impossible to perform an instrument. That is, in this case, after the music playing device recognizes the corresponding block arrangement structure, the music playing device may transmit an error message without playing the music.

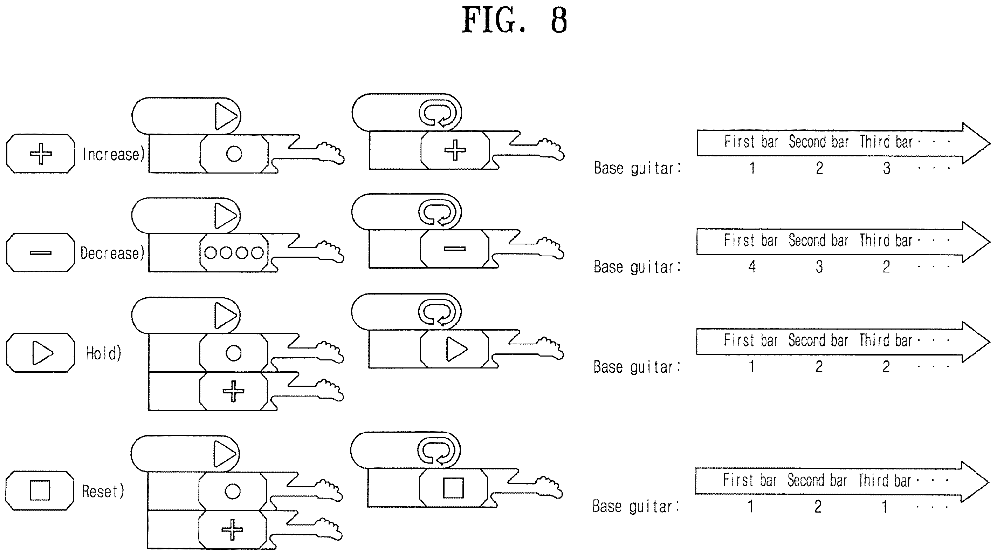

It is understood from FIG. 8 that the operation block is capable of performing an operation (e.g., increase, decrease, or hold) on a current level of the corresponding instrument.

When the increase block is connected to the repeat block, the performance may be executed while the current level (e.g., level 1) of the corresponding instrument is increased one by one.

When the decrease block is connected to the repeat block, the performance may be executed while the current level (e.g., level 4) of the corresponding instrument is decreased one by one.

When the hold block is connected to the repeat block, the performance may be executed in a state where the current level (e.g., level 2) of the corresponding instrument is maintained.

The reset block may serve to reset an instrument level to a level to which a corresponding instrument is set for the first time. For example, as illustrated on the bottom of FIG. 8, because an initial level of the base guitar connected to the start block is 1, the next performance may be executed in a state where the level of the base guitar is reset to 1 by the reset block connected to the repeat block.

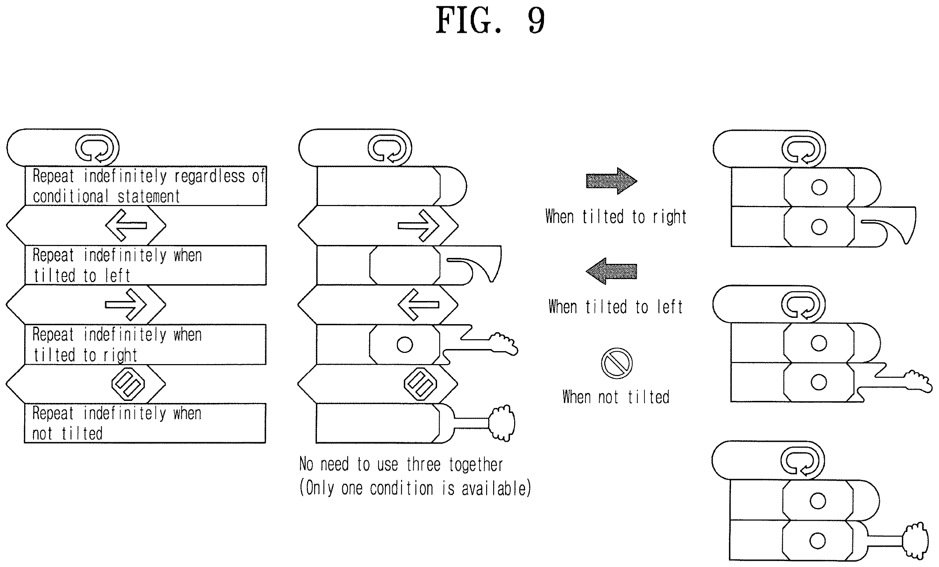

It is understood from FIG. 9 that the role of the condition block is to set a condition of the condition block corresponding to the instrument block until the next condition block appears.

For example, referring to FIG. 9, because the brass block is connected under the right tilt block, the brass block may be played when the music playing device is tilted to the right. Also, because the bass guitar block is connected under the left tilt block, the bass guitar block may be played when the music playing device is tilted to the left. In addition, because the lead guitar block is connected under the else condition block, the lead guitar block may be played when the music playing device is not tilted. In this case, a plurality of condition blocks may not be required, and an operation may be possible even though only one condition block is connected.

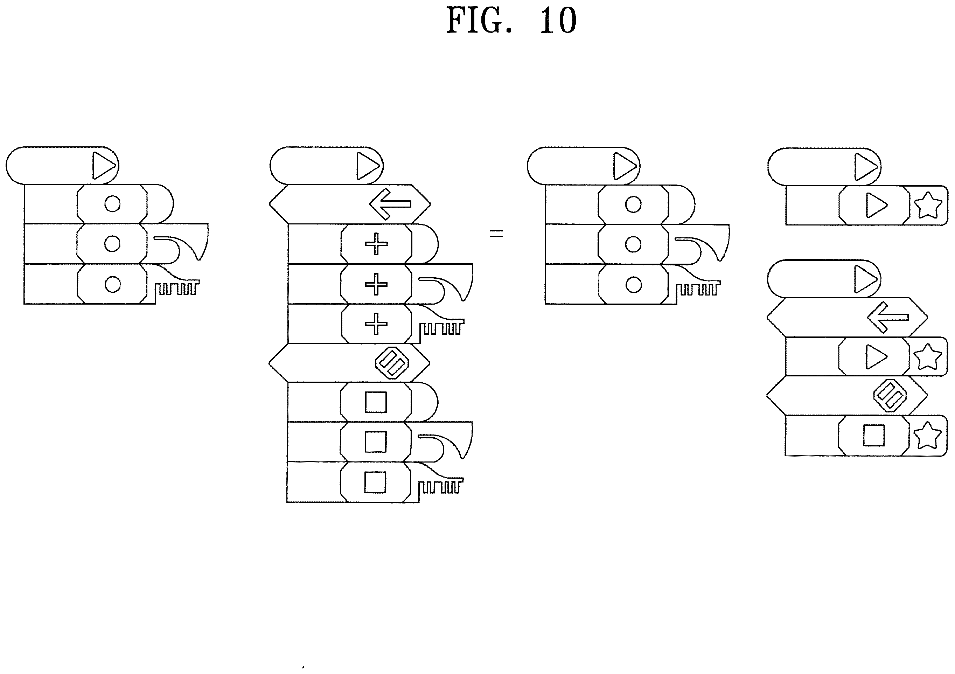

Referring to FIG. 10, an operating method and roles of the star storage block and the star execution block are illustrated.

When instrument blocks to be played are in advance stored in a state of being inserted into the star storage block, the instrument blocks stored in the star storage block may be executed through the star execution block at once. For example, referring to FIG. 10, the drum block of level 1, the brass block of level 1, and the piano block of level 1 may be stored in the star storage block in a state of being put together. In this case, when the start block and the hold block are inserted into the star execution block, the drum block of level 1, the brass block of level 1, and the piano block of level 1 pre-stored in the star storage block may be executed.

Meanwhile, by inserting the operation block into the star execution block, the role of controlling operations of instruments stored in the star storage block at once may be performed. For example, assuming that the instrument blocks pre-stored in the star storage block are the drum block of level 1, the brass block of level 1, and the piano block of level 1, when the increase block is inserted into the star execution block, the drum block of level 2, the brass block of level 2, and the piano block of level 2 may be played.

According to an embodiment of the present disclosure, music playback may be performed only when at least one of the start block, the repeat block, and the star storage block is present in the captured image recognized by the reception device (e.g., a camera) as many as at most one. In contrast, when at least one or more of the start block, the repeat block, and the star storage block exists in the captured scene as many as two or more as blocks of the same kind, the music playing device according to an embodiment of the present disclosure may output an error message and may not play music. For example, when two or more repeat blocks are present in the captured scene, music may not be played.

According to an embodiment of the present disclosure, when each of the start block, the repeat block, and the star storage block is included in the scene recognized by the reception device (e.g., a camera) as many as at most one, each character suitable for the recognized instrument block may play the instrument block through an application executed by the music playing device.

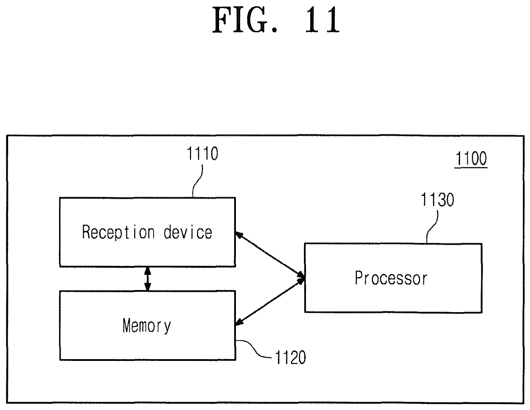

FIG. 11 is a diagram for describing a configuration of a music playing device utilizing blocks, according to an embodiment of the present disclosure.

A music playing device 1100 illustrated in FIG. 11 may mean hardware on which the music playing method illustrated in FIG. 1 is performed. The above description of the music playing method may also be applied to the description of the music playing device 1100 illustrated in FIG. 11.

The music playing device 1100 may include a reception device 1110 which is capable of recognizing and capturing at least one or more blocks outside the music playing device, a memory 1120 which is capable of storing the at least one or more blocks input through the reception device, and at least one or more processors 1130 but is not limited thereto. The music playing device 1100 may further include any other elements not illustrated in the drawing. The reception device may mean, for example, an imaging device.

The processor 1130 may perform the music playing method using blocks, which is described above. For example, the processor 1130 may recognize blocks through the reception device 1110 mounted on the music playing device 1130 by using a pre-trained deep learning neural network model and may determine the arrangement structure of at least one or more blocks. Also, the processor 1130 may play the music in the music playing device based on the determined arrangement structure.

In addition, the processor 1130 may perform at least one or more operations for performing the music playing method using blocks according to the present disclosure.

Although example methods of the present disclosure are expressed as a series of operations for clarity of description, this is not intended to limit the order in which operations are performed, and if necessary, the operations may be performed simultaneously or in different orders. To implement the method according to the present disclosure, the illustrated operation may include any other operation(s), may include the remaining operations except for some operations, or may include another additional operation except for some operations.

Various embodiments of the present disclosure do not list all possible combinations and are intended to describe a representative aspect(s) of the present disclosure, and the matters described in various embodiments may be applied independently, or a combination of two or more of the matters may be applied.

In addition, various embodiments of the present disclosure may be implemented by hardware, firmware, software, or a combination thereof. When implemented by hardware, various embodiments of the present disclosure may be implemented by one or more application specific integrated circuits (ASICs), digital signal processing devices (DSPs), digital signal processing devices (DSPDs), programmable logic devices (PLDs), field programmable gate arrays (FPGAs), a general processor, a controller, a micro-controller, a microprocessor, etc.

The scope of the present disclosure includes software or machine-executable commands (e.g., an operating system, an application, firmware, and a program) which allow an operation according to a method of various embodiments to be performed in an apparatus or a computer, and a non-transitory computer-readable medium in which the software or command and the like are stored so as to be executable in the apparatus or computer.

## Claims

1. A music playing method using at least one or more blocks, which is performed by a music playing device, the method comprising:
capturing an image including the at least one or more blocks through a reception device mounted on the music playing device;
recognizing the captured at least one or more blocks by using a trained deep learning neural network model;
determining an arrangement structure of the recognized blocks; and
playing the music at the music playing device, based on the determined arrangement structure.

2. The method of claim 1, wherein the reception device is an imaging device.

3. The method of claim 1, wherein the deep learning neural network model is a convolutional neural network model.

4. The method of claim 1, wherein the determining of the arrangement structure includes:
determining coordinates of a location where the recognized at least one or more blocks are placed and a block kind.

5. The method of claim 1, wherein the trained deep learning neural network model determines the arrangement structure of the blocks as an arrangement structure in which there are interconnected at least one or more of:
a start block for playing at least one or more instrument blocks connected thereto once;
a repeat block for repeatedly playing at least one or more instrument blocks connected thereto, after music is played by the at least one or more instrument blocks connected to the start block;
a level block for designating a playing level of the instrument block; and
an instrument block corresponding to each instrument for the music playback.

6. The method of claim 5, wherein the music playing device plays the music based on all of a plurality of the arrangement structures captured through the reception device.

7. A music playing device using blocks, comprising:
a reception device configured to capture an image including at least one or more blocks;
a memory; and
at least one or more processors,
wherein the processors are configured to:
recognize the at least one or more blocks captured through the reception device by using a trained deep learning neural network model;
determine an arrangement structure of the blocks: and
play the music based on the determined arrangement structure.

8. A non-transitory computer-readable recording medium storing a program for implementing the music playing method using the blocks, which is set forth in any one of claim 1 to claim 6.
